# DEMANDE DE BREVET EUROPEEN

(11) **EP 0 863 670 A1**
(43) Date de publication de la demande: **09.09.1998**
(21) Numéro de dépôt: 98400494.5
(22) Date de dépôt: 02.03.1998
(51) Int. Cl.: H04N 7/18

(54) **Ensemble optoélectronique pour l'acquisition d'images dynamiques**

(30) Priorité: 06.03.1997 FR 9702678
(71) Demandeur: SAINT-GOBAIN VITRAGE, 92400 Courbevoie (FR); Berqué, Emmanuel, 59850 Nieppe (FR)
(72) Inventeur: Berque, Emmanuel, 59850 Nieppe (FR)
(74) Mandataire: Renous Chan, Véronique

(57) **Abrégé**

L'invention a pour objet un ensemble optoélectronique comprenant au moins un dispositif d'acquisition d'images dynamiques (2) du type caméra vidéo analogique ou numérique à travers au moins un système à diffusion lumineuse variable électrocommandé (4) du type vitrage à cristaux liquides. Le pilotage conjoint de leurs fonctionnements par des moyens électroniques et/ou informatiques (1, 5) synchronise les périodes d'acquisition d'images ΔT (image) dudit dispositif (2) et les périodes de commutation à l'état transparent ΔT (transp.) dudit système (4).

## Description

L'invention concerne un ensemble optoélectronique comprenant au moins un dispositif d'acquisition d'images dynamiques du type caméra vidéo géré par des moyens informatiques et/ou électroniques.

Les utilisations de caméras vidéo sont très variées : on peut y avoir recours pour diverses raisons, artistiques ou de contrôle, de sécurité. Elles peuvent être associées à des moyens d'enregistrement et de visualisation en différé, du type magnétoscopes, et/ou utilisées en circuit fermé.

Cependant, il s'agit la plupart du temps, encore, de caméras analogiques. Or désormais, on a de plus en plus besoin de pouvoir traiter les informations, de pouvoir les transmettre instantanément à des distances importantes. C'est la raison pour laquelle on s'oriente de plus en plus vers des caméras numériques, ou des caméras analogiques que l'on traite pour numériser les images prises, les images numérisées permettant une utilisation bien plus simple. On peut notamment les transmettre au loin par des moyens de télécommunication, en direct ; on peut les retraiter ou les reproduire avec une grande fidélité.

Malgré les avantages du numérique, il reste que les dispositifs basés sur cette technique d'acquisition d'images restent d'un coût significatif.

L'invention a alors pour but la mise au point d'un ensemble optoélectronique basé sur l'acquisition d'images numérisées qui puisse présenter de nouvelles fonctionnalités et/ou que l'on puisse préserver d'éventuelles dégradations.

L'invention a pour objet un ensemble optoélectronique comprenant au moins un dispositif d'acquisition d'images dynamiques du type caméra vidéo analogique (avec traitement de conversion numérique), ou numérique, à travers au moins un système à diffusion lumineuse variable électrocommandé du type vitrage à cristaux liquides. Des moyens informatiques et/ou électroniques appartenant à l'ensemble optoélectronique sont prévus afin de piloter conjointement leurs fonctionnements, en synchronisant les périodes d'acquisition d'images ΔT (image) dudit dispositif et les périodes de commutation à l'état transparent ΔT (transp.) dudit système.

Dans le contexte de l'invention, il faut comprendre par « système à diffusion lumineuse variable électrocommandé » les systèmes fonctionnels se présentant usuellement sous la forme de films à matrice polymère que l'on peut assembler à au moins un substrat rigide du type verre ou plastique tel que le polyméthacrylate de méthyle, et présentant la propriété d'avoir ses propriétés optiques modulables en fonction du champ électrique auquel on le soumet, tout particulièrement sa diffusion lumineuse.

Les systèmes peuvent être désignés sous le terme de valve optique : il s'agit généralement de films comprenant une matrice de polymère, notamment réticulé, dans laquelle sont dispersées des micro-gouttelettes contenant des particules qui présentent la propriété de se placer selon une direction privilégiée sous l'action d'un champ électrique ou magnétique.

En fonction notamment du potentiel appliqué aux bornes des couches conductrices placées de part et d'autre de ces films, et de la concentration et de la nature des particules orientables, les films présentent des propriétés optiques variables.

Ainsi, il est connu du brevet WO-93/09460 une valve optique à base d'un film comprenant une matrice en polyorganosilane réticulable et des particules orientables minérales ou organiques, plus particulièrement des particules absorbant la lumière telles que des particules de polyiodure. Quand le film est mis sous tension, les particules interceptent beaucoup moins la lumière que lorsqu'il est hors tension.

Un vitrage dont le principe de fonctionnement est similaire est également connu sous le terme de vitrage à cristaux liquides. Il est basé sur l'utilisation d'un film placé entre deux couches conductrices et à base d'une matière polymère dans laquelle sont dispersées des gouttelettes de cristaux liquides, notamment nématiques à anisotropie diélectrique positive. Les cristaux liquides, quand le film est mis sous tension, s'orientent selon un axe privilégié, ce qui autorise la vision. Hors tension, en l'absence d'alignement des cristaux, le film devient diffusant et empêche la vision.

Des exemples de tels films sont décrits notamment dans les brevets européen EP-0 238 164, et américains US-4 435 047, US-4 806 922, US-4 732 456. Ce type de film, une fois feuilleté et incorporé entre deux substrats en verre, est commercialisé par la société SAINT-GOBAIN VITRAGE sous la dénomination commerciale « Priva-lite ».

On peut en fait utiliser tous les dispositifs à cristaux liquides connus sous les termes de cristaux « NCAP » (Nematic Curvilinearly Aligned Phases) ou « PDLC » (Polymer Dispersed Liquid Cristal).

On peut également utiliser, par exemple, les polymères à cristaux liquides cholestériques, comme ceux décrits dans le brevet WO-92/19695.

Qu'il s'agisse de valves optiques ou de systèmes à cristaux liquides, les systèmes se présentent sous la forme d'un film de polymère. Afin d'assurer son alimentation électrique, on le dispose usuellement entre deux couches électroconductrices, notamment transparentes, par exemple en métal du type argent ou en oxyde métallique dopé du type oxyde d'indium dopé à l'étain (ITO) ou oxyde d'étain dopé au fluor (SnO₂:F).

En outre, le film avec ses deux couches conductrices est usuellement muni sur au moins une de ses faces, et de préférence chacune d'entre elles, d'un substrat porteur. Celui-ci est généralement transparent. Il peut être choisi rigide ou semi-rigide, par exemple être en verre, polymère acrylique du type polyméthacrylate de méthyle PMMA ou en polycarbonate PC. Il peut aussi être flexible, notamment en polyéthylène téréphtalate PET ou à base de certains polycarbonates flexibles. On peut avoir ainsi une structure du type PET/ITO/polymère/lTO/PET, qui se présente sous la forme d'une feuille souple aisément manipulable. Cet ensemble (polymère + couches électroconductrices + au moins un substrat porteur) peut ensuite être feuilleté à au moins un substrat rigide transparent du type verre à l'aide d'au moins une couche de polymère organique d'assemblage du type polyvinylbutyral PVB, éthylènevinylacétate EVA ou certains polyuréthanes PU.

Toujours dans le contexte de l'invention, on comprend par « état transparent » l'état dudit système correspondant à sa diffusion lumineuse minimale, et par « état opaque » l'état correspondant à sa diffusion lumineuse maximale.

Toujours dans le contexte de l'invention, on comprend par dispositif d'acquisition d'images dynamiques, une caméra, soit numérique, soit analogique. Dans ce dernier cas, on prévoit avantageusement de l'associer à une unité apte à numériser les images analogiques. Dans le reste du présente texte, on le désignera pour plus de simplicité par le terme de caméra.

L'invention telle qu'ainsi définie est avantageuse, en ce sens que la caméra filme à travers le vitrage à diffusion lumineuse variable, de manière à ce que les moments de prise coïncident avec les moments où le vitrage est à l'état transparent, les périodes où la caméra ne filme pas pouvant correspondre aux périodes où le vitrage est opaque. Cette synchronisation peut s'effectuer de différentes manières suivant les objectifs visés et les paramètres pris en compte.

Ainsi, il est important de prévoir que les périodes d'acquisition d'images ΔT (image) de la caméra soient au moins égales au temps nécessaire pour la prise d'une image complète, chaque période correspondant alors à une image, la fréquence des périodes étant choisie également judicieusement pour pouvoir, en final, obtenir un film « continu ». De préférence, on choisit dans des périodes ΔT (image) d'au plus 20 ms.

Si l'on recherche l'indétectabilité visuelle de la caméra, il faut prévoir que les périodes d'état transparent ΔT (transp.) du système à diffusion variable soient inférieures à la persistance rétinienne de l'oeil. Cette indétectabilité peut présenter en effet différents intérêts : elle peut permettre de préserver la caméra de dégradations volontaires, par exemple dans les lieux publics. Elle peut aussi, les personnes filmées ayant préalablement été informées, permettre de filmer de manière plus naturelle des personnes, sans que celles-ci ne soient perturbées par la présence de la caméra. Elle peut aussi être utile si l'on veut que la caméra serve de moyen de contrôle et de sécurité, par exemple de la présence d'objets sur les rails de trains ou de rames de métro sans inquiéter inutilement les non professionnels. Ainsi l'oeil ne « voit » que le système à diffusion lumineuse à l'état opaque, ses passages à l'état transparent pour permettre la prise du film étant trop fugaces pour être perçus. La persistance rétinienne n'est pas une valeur absolue, elle va dépendre notamment de l'éclairage ambiant, de la position de l'observateur par rapport au système à diffusion lumineuse variable. On peut ainsi choisir, suivant les cas, des valeurs de ΔT (transp.) généralement d'au plus 10 ms, et usuellement comprises entre 2 ms et 10 ms.

On a vu que l'on synchronisait les « ΔT (image) » de la caméra et les ΔT (transp.) du système à diffusion variable. Le mieux est de prévoir que les périodes ΔT (transp.) soient inclues dans et égales ou inférieures aux périodes ΔT (image). De préférence, les périodes ΔT (transp.) sont au moins deux fois plus courtes que les périodes ΔT (image), et même jusqu'à dix fois plus courtes. Et c'est un point tout à fait surprenant : en effet, il est connu, comme évoqué plus haut, qu'il est nécessaire de définir une période de temps ΔT (image) minimale en deçà de laquelle la caméra n'a pas le temps d'acquérir une image complète. Or il s'est avéré que, en choisissant cette valeur de ΔT (image) minimale, et en choisissant une valeur de ΔT (transp.) inférieure à cette valeur minimale, on parvenait malgré tout à obtenir des images complètes permettant d'obtenir un film de qualité suffisante.

On est donc parvenu, de manière étonnante, à concilier deux conditions qui, au départ, pouvaient paraître, au moins dans certaines conditions, contradictoires, à savoir d'une part des périodes de prise d'images par la caméra suffisamment longues pour autoriser une qualité d'image suffisante et d'autre part des périodes synchronisées de passage à l'état transparent du système à diffusion variable suffisamment courtes pour que, si le besoin s'en ressent, la caméra puisse restée masquée.

Par ailleurs, si l'on choisit des valeurs de ΔT (transp.) inférieures à ΔT (image),on peut adapter la synchronisation de différentes manières : cela peut être le déclenchement de la prise de vue par la caméra qui déclenche le passage à l'état transparent du système à diffusion variable, qui est, sinon, maintenu à l'état opaque. Les déclenchements peuvent être simultanés : on a alors :
ΔT (transp.)= T₂ (transp.) - T₁ (transp.)
ΔT (image) = T₂ (transp.) - T₁ (image)
   avec
ΔT (transp.) < ΔT (image)
   et
T₁ (transp.) = T₁ (image)

On peut aussi « décaler » T₁ (transp.) par rapport à T₁ (image), en faisant passer le système à diffusion variable à l'état transparent après le déclenchement de la prise de vue. On peut même choisir de faire coïncider T2 (transp.) et T₂ (image).

Dans tous les cas, en particulier dans celui où l'on veut les deux déclenchements T₁ (transp.) et T₁ (image) simultanés, il faut éventuellement prendre en compte l'inertie du système à diffusion lumineuse variable, c'est à dire son temps de réponse, de commutation d'un état à un autre après que l'ordre de commutation ait été envoyé en modifiant son alimentation électrique. Il est cependant généralement très court, notamment en ce qui concerne les vitrages du type « Priva-Lite ».

Dans les cas où on ne filme pas, ou entre deux périodes ΔT (image), on maintient de préférence le système à diffusion variable à l'état opaque. Le déclenchement des commutations état transparent/état opaque du système à diffusion variable est de préférence asservi à celui des prises de vue par la caméra.

Le déclenchement du fonctionnement de la caméra, quant à lui, peut être opéré de différentes manières : il peut être manuel, avec des préréglages quant à la fréquence et les périodes de prise de vue, ou automatisé. On peut aussi programmer la caméra pour qu'elle prenne des séquences de films à des intervalles de temps donnés. Le déclenchement peut aussi être piloté en fonction de mesures automatisées de certains paramètres, notamment à l'aide de capteurs du type capteur volumétrique, capteur à infrarouge, capteur sonore, capteur de température, capteur de fumée. On peut ainsi prévoir que la caméra se mette en marche dès qu'est détectée une effraction, un incendie, ...

On peut ajouter une fonctionnalité supplémentaire à l'ensemble optoélectronique de l'invention, notamment en y incorporant un dispositif de projection d'images fixes (projecteur de diapositives) ou dynamique (projecteur de films) sur le système à diffusion variable. Plusieurs cas de figure peuvent se présenter:
- soit la projection « inactive » de la caméra, dans ce cas, on peut simplement prévoir de maintenir à l'état opaque en permanence le système à diffusion variable tant que dure la projection. Il sert alors d'écran de projection seulement,
- soit on ne veut pas « désactiver » la caméra, on prévoit alors de synchroniser les périodes de projection avec les périodes de commutation à l'état opaque dudit système, les passages à l'état transparent pour permettre la prise de films étant réglés suffisamment courts, comme on l'a vu précédemment, pour que l'oeil ne « voit » que la projection de films ou de diapositives.

On peut prévoir de fonctionnaliser l'ensemble optoélectronique, en y associant au moins une source lumineuse du type lampe diode électroluminescente, émettant à travers le système à diffusion variable, de manière à ce que les périodes d'allumage de ladite source lumineuse soient de préférence synchronisées avec les périodes de commutation à l'état opaque du système, notamment dans le cas où la source lumineuse provient de ou est combinée avec le dispositif de projection d'images évoqué précédemment.

Les images acquises par la caméra vidéo, par ailleurs, peuvent être stockées et/ou traitées et/ou transmises en direct par des moyens de télécommunication. L'ensemble optoélectronique selon l'invention a des applications diverses, par exemple en tant qu'appareil vidéo pour des questions de sécurité, de contrôle, des raisons artistiques, dans un contexte de domotique par un système d'asservissement à un paramètre donné, dans une installation de vidéoconférence.

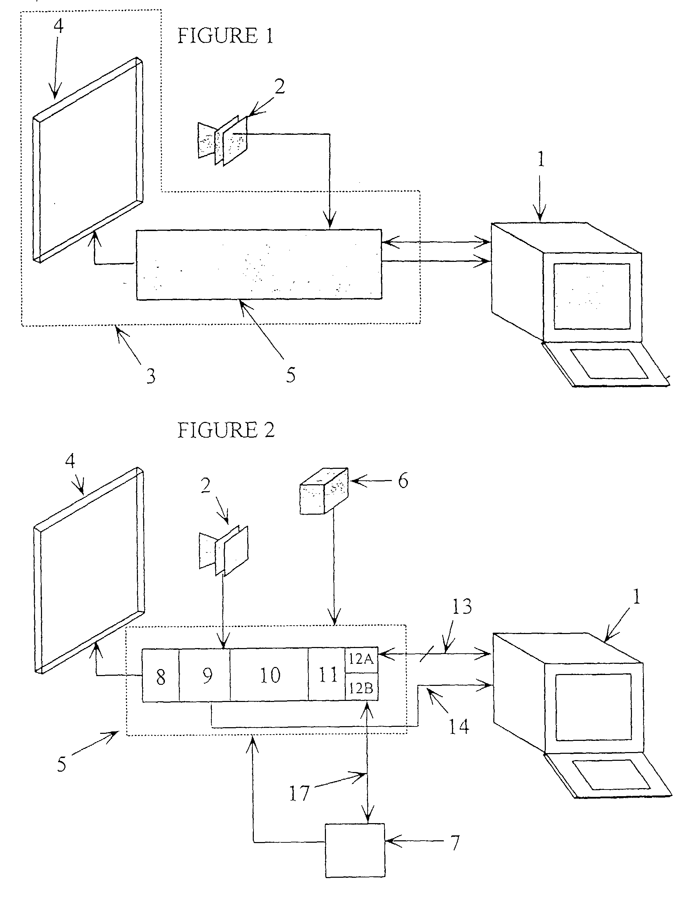

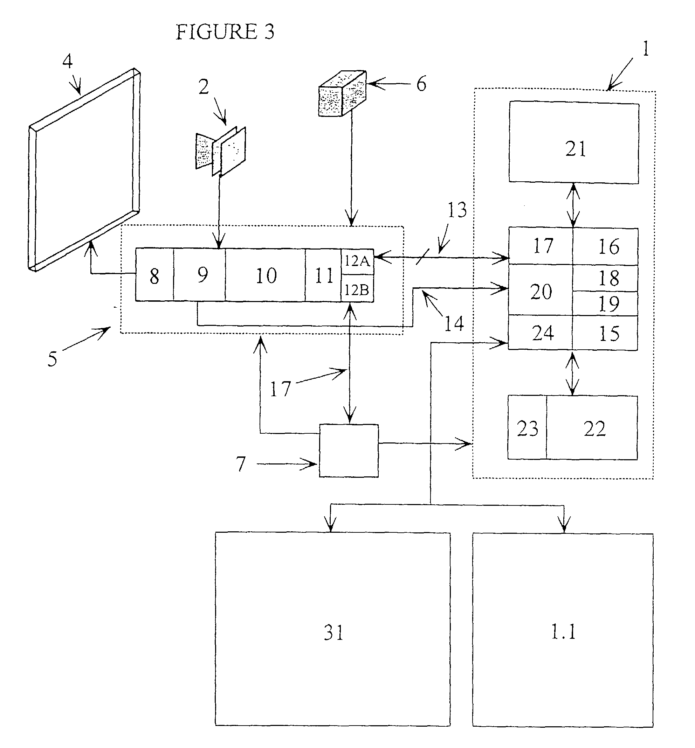

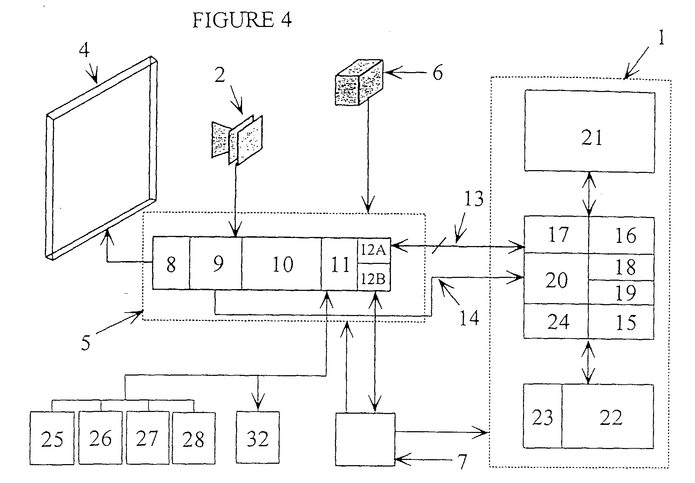

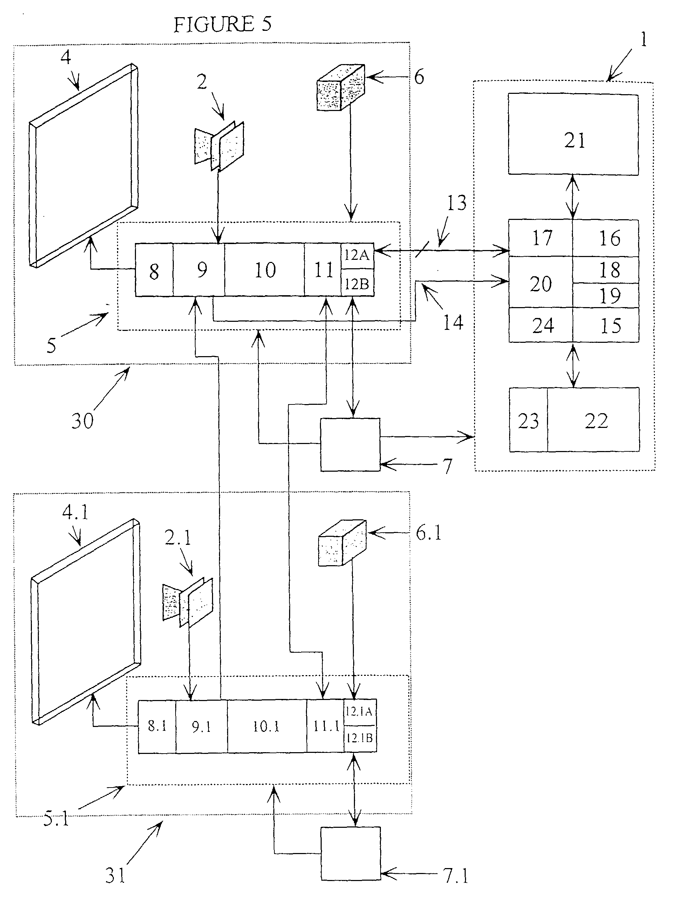

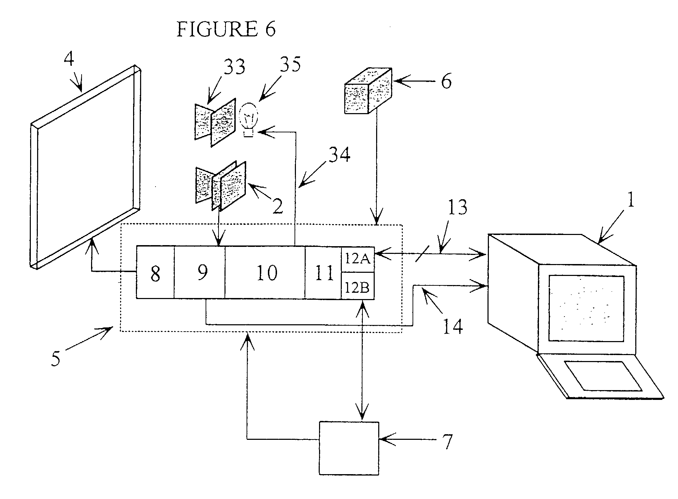

L'invention va maintenant être décrite plus en détail avec un mode de réalisation préféré, mais non limitatif, à l'aide des figures suivantes qui représentent:
□ **figure 1** : une représentation schématique d'un ensemble optoélectronique selon l'invention,
□ **figure 2** : une représentation détaillée de l'unité de pilotage électronique dudit ensemble,
□ **figure 3** : une représentation détaillée de l'unité informatique dudit ensemble,
□ **figure 4** : une représentation des entrées/sorties de l'unité de pilotage électronique selon la figure 2
□ **figure 5** : une représentation de la connexion d'un système esclave du système maître de l'ensemble,
□ **figure 6** : une représentation du couplage d'un appareil de projection vidéo au système.

Toutes ces figures sont schématiques. La figure 1 représente un système selon l'invention, comprenant une caméra vidéo 2 (numérique ou analogique associée à une unité de numérisation non représentée), un vitrage 4 à diffusion lumineuse variable « Priva-Lite » électrocommandable, une unité informatique 1, une unité de pilotage électronique 5, l'ensemble (vitrage + unité de pilotage) destiné à piloter son alimentation électrique (qui n'est pas représentée) étant globalement désigné par la référence 3.

La caméra 2 suivant l'invention est utilisée de manière à ce que l'unité informatique 1 commande l'unité de pilotage électronique 5 qui commande la caméra vidéo 2 conjointement à l'état opaque ou transparent du vitrage 4. Cette commande est synchronisée sur une trame du signal vidéo composite de la caméra vidéo 2. En outre, on choisit le temps de transparence du vitrage 4 de préférence inférieur au temps nécessaire pour la prise d'une image vidéo, c'est-à-dire inférieur au temps d'une période de trame du signal vidéo composite suscité.

Pour l'utilisation de la caméra 2 suivant l'invention, l'ordre d'enregistrement d'une image est transmis par l'unité informatique 1 vers l'unité de pilotage électronique 5 sous forme de variables codées en ASCCI et stockées dans le microprocesseur interne à la carte. Le microprocesseur effectue successivement les différents programmes affiliés aux variables indépendamment du fonctionnement de l'unité information 1.

Ces différentes variables envoyées en code ASCCI sont les suivantes :
- ordre d'acquisition,
- ordre de retard trame (RD),
- ordre de délai d'ouverture (DL)
- ordre de fréquence du signal de la vitre sensitive (FQ),
- ordre de fermeture.

A la fin de cet envoi, l'unité informatique 1 transmet en interne sur la carte d'acquisition vidéo une demande d'enregistrement appelée « send message ». La carte d'acquisition vidéo est, de par sa technologie, synchrone à la trame du signal composite présent à son entrée.

Au même instant, l'unité de pilotage électronique 5 analyse le signal vidéo composite émis par la caméra vidéo 2 afin d'extraire le front de synchronisation trame, le premier front à apparaître devient le front origine à partir duquel l'unité de pilotage électronique 5 affecte le retard trame précédemment ordonné. Ce retard est important car lors de l'envoi du « send message », l'unité informatique 1, et plus particulièrement la carte d'acquisition vidéo, monopolise le fonctionnement de l'unité en effectuant certains opérations avant la capture d'une image prenant un temps considéré comme le temps de retard. Le temps de prise correspond à ΔT (image) d'environ 20 ms.

Une fois ce retard écoulé, l'unité électronique commande la mise à l'état transparent du vitrage 4 par l'envoi de son signal d'alimentation dont la fréquence est préprogrammée, et cela pendant le temps propre au délai d'ouverture préprogrammé.

Une fois ce délai écoulé, l'unité de pilotage électronique 5 commande la mise à l'état opaque du vitrage 4 par l'arrêt de son alimentation correspondant à l'ordre de fermeture.

Le délai d'ouverture précité engendre l'invisibilité du système car, si ce délai ΔT (transp.) est suffisamment court (inférieur ou égal à 10 ms), la persistance rétinienne de l'oeil humain est dépassée et le changement d'état du vitrage n'est plus visible.

On peut résumer de la manière suivante les différentes phases du procédé faisant intervenir l'unité de pilotage électronique 5 :
- l'unité de pilotage électronique 5 de la vitre sensitive 4 permet d'extraire du signal composite de la caméra vidéo 2 le signal de trames et permet lors d'un message d'enregistrement envoyé par l'unité informatique 1 d'attendre la présence d'une trame pour synchroniser et valider ledit message,
- l'unité de pilotage électronique 5 peut différer, suite à la validation du message d'enregistrement envoyé par l'unité informatique 1, la mise en transparence du vitrage 4 pendant un temps défini par une variable d'affectation (RD). Cette variable est stockée dans l'unité de pilotage électronique 5 lors de l'envoi du message d'enregistrement par l'unité informatique 1,
- l'unité de pilotage électronique 5 commande la mise à l'état opaque du vitrage au bout d'un certain temps, pouvant être inférieur à une période du signal trame, déterminé par une variable d'affectation (DL), stockée dans l'unité de pilotage électronique 5 lors de l'envoi du message d'enregistrement par l'unité informatique 1,
- l'unité de pilotage électronique 5 reçoit et stocke, lors de l'envoi du message d'enregistrement par l'unité informatique 1, une variable d'affectation (FQ) qui définit la fréquence du signal d'alimentation du vitrage 4 à l'état transparent,
- l'unité de pilotage électronique 5 (comme explicité ci-après au vu de la figure 6), peut commander une source lumineuse 35 et/ou un projecteur d'images 33.

Selon la figure 2, l'unité de pilotage électronique 5 est composée des éléments suivants :
□ l'interface série type RS 232 (12A) adapte la liaison galvanique 13 avec la carte série de l'unité informatique 1 et permet le transit des ordres d'émission de commande sous forme de variables ASCCI et des accusés de réception allant ou provenant de la carte mère.
□ le bus PC 11 gère les entrées/sorties du système afin de commander en cascade plusieurs dispositifs ; soit un réseau bifilaire propre ou sur le réseau secteur par ondes porteuses 17 avec la carte communication réseau secteur 12B.
□ la carte mère 10 à) microprocesseur d'architecture 68 HC 711 D3 représente le coeur du système de pilotage électronique, son programme spécialement développé permet d'orchestrer le fonctionnement des différentes procédures. La carte mère 10 reçoit et renvoie des variables codées en ASCCI vers l'unité informatique 1 et commande l'interface de puissance 8, l'interruption vidéo 9 et le bus PC 11.
□ l'interface de puissance 8 commande le vitrage 4 par une tension de 118 volts environ en signaux carrés de fréquence commandable par la carte mère 10 de 50 Hz à 1000 Hz, si le vitrage est alimenté il devient transparent, sinon il demeure opaque.

L'interruption vidéo 9 amplifie le signal composite provenant de la caméra 2, extrait le signal de synchronisation trames et sélectionne deux entrées composites distinctes vers une sortie unique 14, ceci afin de brancher plusieurs caméras ou d'autres dispositifs en cascade.

L'unité de pilotage électronique 5 est alimentée par le réseau secteur 7 et possède une batterie de sauvegarde 6 en cas de coupure secteur.

Selon la figure 3, l'unité informatique 1 est un ordinateur compatible PC d'arborescence 486 DX 2-66 Mhz minimum, comprenant une carte mère 15, une carte d'alimentation 16, une carte liaison série type RS 232 ou RS 485 17, un disque dur 540 Mo minimum 18, une mémoire RAM de 8 Mo minimum 19, une carte d'acquisition vidéo avec entrée composite et compression en temps réel format INDEO ou MPEG 20, un écran couleur VGA ou supérieur 21, un clavier 22, une souris 23, une carte de communication sur le réseau téléphonique (modem) 24.

Cet ensemble informatique possède de préférence un environnement DOS et WINDOWS 95 minimum ainsi qu'un logiciel de gestion de la carte d'acquisition vidéo et le logiciel spécialement développé pour gérer le protocole de conversation vers l'unité de pilotage électronique 5.

Contrairement au stockage analogique, les images sont désormais numériques et stockées sur le disque dur 18. Elles peuvent de fait être archivées facilement et dans un minimum de place pour être ensuite réutilisées à n'importe quel moment.

Le traitement des informations est maintenant numérique, les installations ne sont donc plus restrictives à un réseau local mais peuvent être délocalisées.

En effet, l'unité informatique principale 1 reliée par modem 24 à la ligne téléphonique 29 peut commander des ensembles vidéos et optoélectroniques esclaves 31 à distance et, en temps réel, recevoir des images et des informations par cette même liaison. De la même manière, l'unité informatique 1 principale peut être connectée à une autre unité informatique secondaire locale ou décentralisée 1.1.

Le branchement s'effectue alors suivant la figure 5, l'unité de pilotage électronique 5 est connectée par son bus PC 11 à l'autre bus PC d'une unité de pilotage électronique 5.1, celle-ci est alors paramétrée par son microprocesseur 10.1 comme étant une carte esclave 31 alors que l'unité électronique 5 est une carte paramétrée comme étant maître.

Le système à caméra suivant l'invention peut recevoir diverses entrées de commande qui, lors d'un mode de fonctionnement particulier demandé à l'unité informatique, peuvent engendrer le démarrage d'un enregistrement.

Selon la figure 4, l'unité de pilotage électronique 5 peut recevoir, dans le cadre d'un système d'alarme, une détection de chocs 25 pour une protection de vitres ou de surfaces, une détection de par capteurs infrarouges passifs 26 pour une détection volumétrique de personnes, une détection d'incendie 27, une détecteur de rupture de réseau 28 pour un ensemble de capteurs périmétriques ou d'autres types de capteurs.

Afin de répondre à diverses demandes de domotique, le système selon l'invention peut commander divers appareils électriques par ses sorties 32, ou en utilisant la communication secteur 12B, ceci étant réalisable en local ou via le modem en délocalisé.

Les intégrations esthétiques du système suivant l'invention sont nombreuses et peuvent parfois révéler un dédoublement de fonctionnalité de certains appareils anodins.

Selon la figure 6, dans le cadre d'une intégration publicitaire, le couplage d'un appareil de projection vidéo 33 sur le dispositif s'effectue par projection arrière d'une image fixe ou dynamique sur le vitrage 4 en mode opaque.

Le système selon l'invention doit pouvoir, pendant le même temps, enregistrer éventuellement une séquence vidéo. Cette réalisation nécessite une synchronisation de la commande de lumière projetée sur le vitrage 4 par rapport à son propre signal de commande.

En effet, lors d'une séquence d'enregistrement, le vitrage 4 est alternativement opaque et transparent, l'unité de pilotage électronique 5 va donc délivrer au projecteur vidéo un signal de commande inversé 34 de sa source lumineuse 35 à celui du vitrage 4. Quand le vitrage 4 est opaque, le projecteur 33 projette son image, et quand le vitrage est transparent, le projecteur arrête sa projection.

Comme la transparence du vitrage 4 peut être nettement inférieure à la période d'une trame de la caméra vidéo 12, le temps de transparence est inférieur à la persistance rétinienne de l'oeil humain, et de ce fait, l'image projetée n'est pas altérée.

L'enregistrement d'une image ou d'une séquence d'images est donc réalisable en même temps que la projection vidéo.

Dans d'autres types d'applications, la source lumineuse 35 commandée par le signal 34 peut être une simple lampe ou des diodes électroluminescentes ou d'autres sources classiques.

En conclusion, l'invention a mis au point un nouvel appareil utilisant une caméra vidéo, qui est entièrement numérisé et qui peut, si nécessaire, être visuellement indétectable. Il comprend un dispositif d'acquisition et d'interruption optoélectronique d'images numérisées, géré par une unité informatique de traitement, d'enregistrement, de restitution, d'impression et de télécommunication desdites images. On peut sélectionner une vitesse d'acquisition des images numérisées supérieure à la persistance rétinienne de l'oeil humain.

## Revendications

1. Ensemble optoélectronique comprenant au moins un dispositif d'acquisition d'images dynamiques (2) du type caméra vidéo analogique ou numérique à travers au moins un système à diffusion lumineuse variable électrocommandé (4) du type vitrage à cristaux liquides, le pilotage conjoint de leurs fonctionnements par des moyens électroniques et/ou informatiques (1, 5) synchronisant les périodes d'acquisition d'images ΔT (image) dudit dispositif (2) et les périodes de commutation à l'état transparent ΔT (transp.) dudit système (4).

2. Ensemble optoélectronique selon la revendication 1, ***caractérisé en ce que*** les périodes de commutation à l'état transparent ΔT (transp.) du système (4) sont comprises dans et inférieures ou égales aux périodes d'acquisition d'images ΔT (image) du dispositif (2), avec de préférence des périodes ΔT (transp.) au moins deux fois plus courtes que les périodes ΔT (image), avec prise en compte éventuelle de l'inertie de la commutation du système à diffusion lumineuse variable (4).

3. Ensemble optoélectronique selon la revendication 1 ou 2, ***caractérisé en ce que*** les périodes d'acquisition d'images ΔT (image) du dispositif d'acquisition d'images (2) sont au moins égales au temps nécessaire pour la prise d'une image complète, et sont notamment d'au plus 20 ms.

4. Ensemble optoélectronique selon l'une quelconque des revendications précédentes, ***caractérisé en ce que*** les périodes de commutation à l'état transparent ΔT (transp.) du système (4) sont inférieures à la persistance rétinienne de l'oeil, et notamment comprises entre 2 ms et 10 ms.

5. Ensemble optoélectronique selon l'une des revendications précédentes, ***caractérisé en ce que*** les images sont numérisées, soit en ayant recours à un dispositif d'acquisition d'images numériques, soit à un dispositif d'acquisition d'images analogiques couplé à une unité de conversion d'images analogiques en images numériques.

6. Ensemble optoélectronique selon l'une des revendications précédentes, ***caractérisé en ce que*** en période de non fonctionnement du dispositif d'acquisition d'images (2), le système à diffusion lumineuse variable (4) est maintenu à l'état opaque.

7. Ensemble optoélectronique selon l'une des revendications précédentes, ***caractérisé en ce que*** le déclenchement du dispositif d'acquisition d'images (2) est manuel, ou automatisé de manière séquentielle ou à l'aide de capteurs du type capteur volumétrique, capteur à infrarouge, capteur sonore, capteur de température, capteur de fumées.

8. Ensemble optoélectronique selon l'une des revendications précédentes, ***caractérisé en ce qu****'il* comprend également un dispositif de projection d'images fixes ou dynamiques (33) du type projecteur de diapositives ou caméra sur le système à diffusion lumineuse variable (4), les périodes de projection étant synchronisées avec les périodes de commutation à l'état opaque dudit système (4).

9. Ensemble optoélectronique selon la revendication 8, ***caractérisé en ce qu****'il* comprend également au moins une source lumineuse (35) du type lampe ou diode électroluminescente émettant à travers le système à diffusion lumineuse variable (4), les périodes d'allumage de ladite source lumineuse étant synchronisées avec les périodes de commutation à l'état opaque dudit système.

10. ensemble optoélectronique selon l'une des revendications précédentes, ***caractérisé en ce que*** les images acquises par le dispositif (2) sont stockées et/ou traitées et/ou transmises en direct par des moyens de télécommunication.

11. Utilisation de l'ensemble optoélectronique selon l'une des revendications précédentes en tant qu'appareil de vidéo pour des raisons de sécurité, de contrôle, ou incorporé dans un système de domotique, ou de vidéoconférence.
